# EUROPEAN PATENT SPECIFICATION

(11) **EP 2 727 894 B1**
(45) Date of publication and mention of the grant of the patent: **15.03.2017**
(21) Application number: 12007436.4
(22) Date of filing: 30.10.2012
(51) Int. Cl.: C04B 28/00, C04B 20/06

(54) **Forming of ceramic materials made with inorganic polymers**
Formgebung von keramischen Materialien aus anorganischen Polymeren
Façonnage de matériaux céramiques à partir de polymères inorganiques

(43) Date of publication of application: 07.05.2014
(73) Proprietor: Sociedad Anónima Minera Catalano-Aragonesa, 50001 Zaragoza (ES)
(72) Inventor: Caballero Lòpez, Miguel Angel, 50001 Zaragoza (ES); Ejarque Esteve, Sara, 50001 Zaragoza (ES); Espelleta Casinos, Victor, 50001 Zaragoza (ES); Ferrando Molinos, Fidel, 50001 Zaragoza (ES); Garcia Ten, Javier, 12006 Castellón (ES); Vicent Cabedo, Mónica, 12006 Castellón (ES); Amorós Albaro, José Luís, 12006 Castellón (ES); Tolosa Cortés, José Ignacio, 50001 Zaragoza (ES)
(74) Representative: Schäfer, Matthias W.

(56) References cited:
- EP-A1- 2 502 890
- EP-A2- 0 431 503
- JP-A- 2008 254 939
- US-A1- 2011 290 153
- YUNSHENG ET AL: "Impact properties of geopolymer based extrudates incorporated with fly ash and PVA short fiber", CONSTRUCTION AND BUILDING MATERIALS, ELSEVIER, NETHERLANDS, vol. 22, no. 3, 20 December 2007 (2007-12-20), pages 370-383, XP022396756, ISSN: 0950-0618, DOI: 10.1016/J.CONBUILDMAT.2006.08.006
- LI ET AL: "Short Fiber Reinforced Geopolymer Composites Manufactured by Extrusion", JOURNAL OF MATERIALS IN CIVIL ENGINEERING, ISION, US, vol. 17, no. 6, 1 January 2005 (2005-01-01), pages 624-631, XP009166880, ISSN: 0899-1561, DOI: 10.1061/(ASCE)0899-1561(2005)17:6(624)

## Description

This document relates, as its title indicates, to the forming of ceramic materials made with inorganic polymers, by alkaline activation of thermally treated clays, and to a subsequent phase involving the extrusion of the mixture.

### Prior art

This invention relates to the manufacture of ceramic products from geopolymers, by means of alkaline activation of metaclays.

To aid understanding of this procedure a series of terms used in the description are defined below:
Geopolymers: Inorganic synthetic aluminosilicate polymers that result from the chemical reaction caused in highly alkaline conditions between an aluminosilicate powder and an activating solution (based on a mixture of sodium or potassium hydroxide and an alkaline solution of sodium silicate or potassium silicate respectively) at ambient conditions. In laboratories metakaolin is normally used as a base material for the synthesis of geopolymers, it being generated by the thermal treatment of kaolinite between 550°C and 950°C.
Alkaline activation: A chemical process in which a pulverulent material of a silico-aluminous nature is mixed with an alkaline activator to generate a paste capable of setting and hardening in a short period of time. The main reaction product in this process is an alkaline silicoaluminate gel (N-A-S-H gel), amorphous to XRD, which displays a three-dimensional structure. These materials, which are generically known as inorganic alkaline polymers as well as geopolymers, geocements and zeoceramics etc, may possess a wide variety of properties and characteristics (high initial mechanical strength, resistance to fire and acids etc, depending on the conditions in which the process takes place (type of activator, temperature, time, etc).
Silico-aluminous material: In general terms, any material that contains silicon and aluminium. In this specific context the term refers to materials that are able to react at ambient temperature with the alkaline activator. Typically it relates to pozzolanic products such as fly ash, metaclays and perlite.
Metaclays: Clays treated at a high temperature but not so high that the structure collapses. The best known of them is metakaolin, which is obtained through the treatment of kaolin in a temperature range of 550-950°C, causing the dehydroxylation of the kaolinite and the reorganisation of its structure, although there are references for metaclays based on smectites and illites. Kaolin, smectites and illites are typical silico-aluminous clays. As is always the case, these clays may be composed of minority components such as sands, feldspars, carbonates, opal, quartz, etc.
Clays: Mineralogically, a specific group of phyllosilicates are termed clays. The structure of these phyllosilicates is based on the stacking of planes of oxygen ions and hydroxyls. SiO₄⁴⁻ tetrahedra share three of their four oxygen atoms with neighbouring tetrahedra to form an infinite-plane structure and the formula Si₂O₅²⁻, which constitute the basic unit of phyllosilicates. The silica tetrahedron may be replaced in part by Al³⁺ or Fe³⁺. These tetrahedral layers bond to other octahedral layers such as gibbsite or brucite. The connecting plane between both layers is formed by the apical oxygen atoms not shared by the SiO₄⁴⁻ tetrahedra and by the OH⁻ groups of the octahedral layer.

Similar bonding may occur on the opposite surface of the octahedral layer. Phyllosilicates may thus be formed either by two layers, one tetrahedral and one octahedral (known as 1:1 phyllosilicates), or by three layers, one octahedral and two tetrahedral (known as 2:1 phyllosilicates). The unit formed by the bonding of these two or three layers is called a sheet. If all the octahedral gaps are filled, the sheet is termed trioctahedral. If only two thirds of these positions are occupied and the rest are vacant, it is termed dioctahedral.

The group formed by candites and serpentines are 1:1 phyllosilicates. The former comprises minerals such as kaolinite, nacrite, dickite and halloysite. 2:1 phyllosilicates comprise pyrophyllite-talc groups, smectite, vermiculite, illite, mica and chlorite.

Sepiolite and palygorskite also belong to this group of minerals, although they do vary in structure from other phyllosilicates. Structurally they are formed by mica-type discontinuous sheets. Unlike other phyllosilicates, which are laminar, they are fibrous, as the basal layer of oxygen atoms is continuous, although the apical oxygen atoms undergo periodic inversion every eight octahedral positions (sepiolite) or every five positions (palygorskite). This inversion causes the interruption of the octahedral layer, which is discontinuous.

Related to the presence of clays are minerals such as sodium feldspar, potassium feldspar, plagioclases, quartz, carbonates (calcite, dolomite and siderite etc), chlorites, pyrite, iron oxides (hematites, goethite), gibbsite, sericite and vermiculite, etc. The industry has developed well-known mechanical, physical and chemical methods for the benefit and purification of clays.

Alkaline activator: An MOH (M=Na, K, Rb, Cs) solution with a typical concentration of 8-10 M. It may be used on its own or in combination with sodium or potassium silicate, either pre-prepared or starting from its components. It provides the amount of alkaline metal required for the reaction and increases the amount of reactive silicon (through the silicate). The typical concentration of silicate in the MOH solution is 15%, although any greater or smaller amounts may be used.

Sodium silicate/potassium silicate: Soluble silicates may be found in very different forms and compositions. Depending on the nature of the alkaline ion, sodium silicates nSiO₂:Na₂O are differentiated from potassium silicates nSiO₂:K₂O.

Filler: Materials that do not form part of the reaction but which improve its properties (silicas, sands, quartz, feldspars, feldspar sands, other clays, fibres, etc).

Extrusion: Extrusion forming is a development of the traditional formwork or compression method. The method involving extrusion with a de-airing chamber and Archimedes screw produces a linear product in a continuous manner, with a controlled cross-section, and which may be cut to a required length. Effective and efficient, this method comprises a first section with a mixing mill, which has two rows of blades assembled on two shafts that rotate in opposite directions, thereby providing an elevated cutting action that mixes the material efficiently, with the material being extruded between the blades.

The mixing mill is supplied with the clay and activator premix. The mixing mill mixes the premix, making it homogeneous, maximising its plasticity and expelling air by pushing the paste. By means of an Archimedes screw, used to transport the mixture, the mixture then passes through a perforated plate in the vacuum chamber. The material, in the form of pellets, is de-aired in a uniform manner by means of the application of a vacuum for eliminating as much air as possible.

Finally, the mixture is pushed to the compacting chamber, where another Archimedes screw transports the material and precompacts it in order to remove any porosity before it passes through the die or rigid nozzle. The resulting product, which has a constant cross-section and is variable in length, is supported on trays and is cut to the required length by means of a cutting system.

The advantage of this type of screw extruder is that, in a continuous manner, the mixing, de-airing, consolidation and the final shaping of the piece to be manufactured takes place in it. In addition, the factors of pressure, helix angle, and their rated ratio with respect to the fiction area of a nozzle with a constant section, make the end product an innovative piece of high technical quality.

Curing: *In this context curing refers to the treatment of the sample at low temperatures (20°C to 90°C) and high* relative humidity (40% to 100%) for a time period of between one hour and seven days, preferably between five and 24 hours, and more preferably between 20 and 24 hours.

Mechanical strength: The EN 14411 standard for ceramic tiles comprises two magnitudes to assess mechanical strength:
- Breaking strength: In direct relation to the load applied to the piece, with a correction coefficient that relates the distance between supports and the width of the specimen, expressed in newtons (N). The result of the test is a function of the thickness of the piece for a same type of material.
- Modulus of rupture: Also known as bending strength, which is deduced from the breaking strength magnitude using a mathematical formula (breaking strength divided by the square of the minimum thickness in the break section). The result of the test, expressed in newtons per square millimetre (N/mm²; 1 N/mm² = 1 MPa), provides us with an indication of the mechanical strength of the ceramic pieces, irrespective of their thickness.

It is therefore understood that the modulus of rupture is an intrinsic characteristic of the material, in other words that two ceramic pieces manufactured according to the same process and which differ only in their thickness have the same modulus of rupture, although the force required to break them is much greater in the thicker piece.

### Background to the invention

There are various patents and scientific publications relating to geopolymer applications.

The first reference to these types of compounds dates to the mid-20th century (V. D. Glukhovsky: *Soil silicates*, 1959, Kiev, Gosstroyizdat Ukrainy Publishing), although it is only in the last few years that greater interest appears to have been taken in them. The following are general publications on geopolymers:
- H. Xu. Ph D: Thesis: Geopolymerisation of aluminosilicate minerals. University of Melbourne, Department of Chemical Engineering, 2002.
- J. Davidovits: Geopolymer. Chemistry & Applications. 2008.
- J. Davidovits: 30 years of successes and failures in geopolymer applications. Market trends and potential breakthroughs. Proc. Int. Conf. Geopolymer 2002, Melbourne, Australia, October 2002.
- Behzad Majidi: Geopolymer technology, from fundamentals to advanced applications: a review. Materials Technology 2009, 24, 2, 79-87.
- Khale, R. Chaudhary: Mechanism of geopolymerization and factor influencing its development: a review. J. Mater Sci. (2007), 42, 729-746.
- Alkali-activated geopolymers: A literature review. July 2010. Air Force Research Laboratory. Materials and Manufacturing Directorate.
- Miladin Radovic et al: Effects of Water Content and Chemical Composition on Structural Properties of Alkaline Activated Metakaolin-Based Geopolymers. J. Am. Ceram. Soc., 1-9 (2012).

They have, to the virtual exclusion of other options, been studied as an environmentally friendly alternative to cement, an area that has been discussed in great detail. There are a large number of documents on the subject, such as the patents:
- US201215381A1, *Geopolymer mortar and method.*
- US2012152153A1, *Geoploymer composite for ultra high performance concrete.*
- US2012037043A1, *Construction materials and method of production.*

These documents present its main characteristics as a process that does not generate CO₂ and possesses improved properties with regard to mechanical strength, durability, resistance to weather agents and fire, and heat and noise insulation. Similarly, they have been proposed as alternatives for prefabricated structures, of various shapes.

Other known applications state that these products are chemically similar to zeolites and have suggested they be used as waste absorbents and/or inertising agents, for radioactive waste in particular, as catalysts for cracking in oil refining and as fire retardants, as detailed in the following patents:
- FR2651270, *Fireproof structure, in particular for a door, window or the like.*
- GB2482732, *Building component with fire retardant foam.*
- DE102004051712, *Production of a body having a ceramic base body used in chimney construction comprises arranging* a *molding tool in the region of an opening of the base body, pouring a geopolymer mortar into the tool, hardening and removing the tool.*

Finally, some applications of advanced technical ceramics have also been described, especially applied to aeronautics, Formula 1 etc, as the following patents show:
- WO2005019130A1, *Geopolymers and methods for their production.*
- MX2008001086A1, *Photoluminescent geopolymers.*
- US7846250B2, *Geopolymer and CO₂ storage.*
- US2011132230A1, *Geopolymer precursor dry mixture, package, processes and methods.*

Similarly, the prior art shows that the alkaline activation of metaclays is already known. The following are publications on the use of these chemical reactions for obtaining ceramic materials:
- WO2006121823A2, *Geopolymer composites and structures formed therefrom.*
- WO8303093A1, *Method for the manufacture of ceramics decorated with aluminosilicate geopolymers.*
- US4888311 A, *Ceramic-ceramic composite material and production method.*
- US2007221100A1, *Process for the preparation of self-glazed geopolymer tile from fly-ash and blast furnace slag.*
- Alkaline activation of metakaolin. The effect of the addition of soluble silicate and of the drying temperature. J. Sp. Ceram. Soc. V., 47, 1, 35-43 (2008).
- Formation of Ceramics from Metakaolin-Based Geopolymers. Part I: Cs-Based Geopolymer. J. Am. Ceram. Soc., 92 [1] 1-8 (2009).
- Formation of Ceramics from Metakaolin-Based Geopolymers. Part II: K-Based Geopolymer. J. Am. Ceram. Soc., 92 [3] 607-615 (2009).

However, in all the preceding cases, the material is formed by well-known methods of formwork or compression, and the option offered by extrusion is not discussed.

There are also publications where extrusion is used in geopolymers, though not to obtain ceramic materials:
- WO2011110834A1, *Window or door frame.*
- EP2209963B1, *Extruded geopolymer frame profiles for windows or doors.*
- Zongjin Li et al, Short Fiber Reinforced Geopolymer Composites Manufactured by Extrusion. Journal of Materials in Civil Engineering. November/ December 2005, 624-631.
- Zhang Yunsheng et al, Impact properties of geopolymer based extrudates incorporated with fly ash and PVA short fiber. Construction and Building Materials 22 (2008) 370-383.

However, these publications only relate to the manufacture of profiles for windows or doors, and do not include any specific process for the treatment of materials.

EP 2 502 890 A1 describes an alkali activated concrete composition and the use of the composition in precast concrete elements. The alkali activated concrete composition comprises a binder and an alkali activator, wherein the content of blast furnace slag in the binder is 48-54 wt.-% and the binder comprises a combination of fly ash and blast furnace slag in the ratio 0.4-1.0 by weight.

EP 0 431 503 A2 describes hydraulic compositions and high-strength composite materials. The hydraulic composition comprises blast furnace slag powder, a water-soluble polymer and an alkaline substance. The high-strength composite material is produced by kneading and molding a composition which comprises blast furnace slag powder, a water-soluble polymer, an alkaline substrate and water, and wet curing the molded composition. The high-strength composite material has high bending strength and excellent water resistance by using uncostly blast furnace slag powder.

JP 2008-254939 A describes a high-strength geopolymer-hardened body blended with fired kaolin as activated filler and a method of producing the same. The high-strength geopolymer-hardened body is obtained by mixing a filler prepared by blending fired kaolin fired at 850-950°C as activated filler, geopolymer and water, forming and aging at a high temperature.

### Disclosure of the invention

In order to solve existing problems in the manufacture of ceramic products and thereby improve the prior art, the forming of ceramic materials made with inorganic polymers that is the object of this invention has been devised, and which employs the alkaline activation of silico-aluminous material and a subsequent phase in which the mixture is extruded.

The silico-aluminous material comprises metaclays. Metaclays are obtained as a result of prior phase of thermal treatment of clays, which preferably contain at least 40% kaolinite, performed at a temperature ranging between 550°C and 850°C, during a treatment time ranging between five minutes and 24 hours, through a method selected from the group formed by rotary kiln, fluidised bed, and flash calciners.

A clay selected from the group formed by aluminosilicates that have not been thermally treated, magnesium silicates and other clays that when thermally treated do not produce metaclays, or any combination of them is added in a proportion ranging between 5% and 40%, preferably between 20% and 30% in weight, and more preferably between 20% and 25% in weight in relation to the thermally treated clay.

The mixture of thermally treated clay and clay is mixed with the components of the activating solution, which is preferably presented in the form of an MOH solution (M=Na, K) with a concentration between 2 and 12 M, containing sodium or potassium silicate in a percentage ranging between 0% and 20%, preferably 15%.

The mixing phase is performed by any of the methods well known in the industry, although the silico-aluminous material is preferably mixed in powder, generally the finer the better, with the liquid activating solution, with a ratio between the activating solution and the powdered materials (liquid/solid) ranging from 0.25 to 0.85, preferably from 0.40 to 0.60.

The mixing of silico-aluminous material with the components of the activating solution (sodium or potassium hydroxide, sodium or potassium silicate) in the form of powdered solids may optionally be carried out, with the subsequent addition of water prior to the start of the following phase. Mixing may be performed using the mixing, grinding, atomising, flash drying methods etc commonly employed in the industry.

When the components are mixed the extrusion process is performed by any of the methods commonly used in the ceramics industry (helical and piston extruders in the main, in any of their variants).

Once the formed pieces have been obtained they are subjected to a curing process at low temperatures (20°C to 90°C) and high relative humidity (40% to 100%), for a time period of between one hour and seven days, preferably between five and 24 hours, and more preferably between 20 and 24 hours.

Finally, the pieces are dried either at ambient temperature or at a temperature of up to 100°C.

### Advantages of the invention

This procedure for the forming of ceramic materials made with inorganic polymers presented herein provides many more advantages than the systems currently available, the most important of which is that the ceramic products obtained possess mechanical properties that are vastly superior to the geopolymeric materials described in the scientific literature to date.

Another important advantage is that this procedure uses an extrusion process and is therefore compatible with existing equipment for the manufacture of ceramic products.

It should also be pointed out that in spite of their superior ceramic qualities, the ceramic products obtained remain compatible with the finishing processes commonly used in the ceramics industry, such as high-temperature thermal treatment, colourings, pigments, assorted organic additives (silicones, silanes, bactericides), decoration processes, etc.

Another considerable advantage is that this procedure improves mechanical resistance in relation to the other two known methods of forming geopolymers: moulding and compression. Obviously these resistances may be obtained with known ceramic procedures with clays at high temperatures, although the procedure described herein involves very significant energy savings as it avoids the high-temperature firing process (typically between 900°C and 1300°C), which is necessary in conventional processes, and replaces it with low-temperature drying, which is far less expensive in terms of energy costs.

It should also be stated that clay may be added to enhance final consistency and mechanical properties. The addition of clay improves the plasticity of the mixture and makes for better extrusion, while also increasing mechanical strength considerably. Finally, the literature shows how geopolymers possess better properties in terms of fire resistance, heat and sound insulation and durability in relation to external agents (ice, saline environments, humidity, etc), which allows ceramic products with excellent characteristics to be obtained.

### Preferred embodiment of the invention

The procedure for the forming of ceramic materials made with inorganic polymers that is the object of this invention comprises:
- a phase for the mixing of a silico-aluminous material comprising metaclays with an activating solution, comprising an alkaline activator, wherein the alkaline activator comprises an MOH solution, optionally in combination with sodium or potassium silicate, wherein M is selected from the group consisting of Na, K, Rb and Cs,
- a phase for the extrusion forming of the resulting mixture,
- a curing phase performed at low temperatures ranging between 20°C and 90°C, and at high relative humidity ranging between 40% and 100%, for a period of time of between one hour and seven days, and,
- a drying phase at a temperature of between 20°C and 100°C, and.
the mixing phase comprising the addition of a clay selected from the group formed by aluminosilicates that have not been thermally treated, magnesium silicates and other clays that when thermally treated do not produce metaclays, or any combination of them, in a proportion ranging between 5% and 40% in weight in relation to the metaclays, wherein the metaclays are obtained as a result of a previous phase for the thermal treatment of clays, performed at a temperature ranging between 550°C and 850°C, for a treatment time ranging between five minutes and 24 hours, by means of a method selected from the group formed by rotary kiln, fluidised bed, and flash calciners.

Metaclays are obtained as a result of a previous phase for the thermal treatment of clays, which preferably contain at least 40% kaolinite, performed at a temperature ranging between 550°C and 850°C, for a treatment time ranging between five minutes and 24 hours, through methods selected from the group formed by rotary kiln, fluidised bed, and flash calciners.

The activating solution that is mixed with the thermally treated clays is presented in the form of an MOH solution (M=Na, K) with a concentration between 2 and 12 M, which may optionally contain sodium or potassium silicate in a percentage ranging between 0% and 20%, preferably 15%.

Clay is added in the mixing phase to improve the final consistency and the mechanical properties, in a proportion ranging between 5% and 40%, preferably between 20% and 30%, and even more preferably between 20% and 25% in weight in relation to thermally treated clay. This clay is selected from the group formed by non-thermally treated aluminosilicates, magnesium silicates (such as magnesium smectites and sepiolite), other clays that, when thermally treated, do not produce metaclays, or any combination of them.

The mixing phase is performed by any of the methods well known in the industry, although the silico-aluminous material is preferably mixed in powder, generally the finer the better, with the liquid activating solution, with a ratio between the activating solution and the powdered materials (liquid/solid) ranging from 0.25 to 0.85, preferably from 0.40 to 0.60.

A phase in which the silico-aluminous material is mixed with the components of the activating solution (sodium or potassium hydroxide, sodium or potassium silicate) in the form of powdered solids may optionally be carried out, with the subsequent addition of water prior to the start of the following phase. Mixing may be performed using the mixing, grinding, atomising, flash drying methods etc. commonly employed in the industry.

As part of the mixing phase filling additives or fillers may optionally be added, selected from the group formed by silica, sand, quartz, feldspar, feldspar sand, other clays, fibres, or any combination of them.

The mixing phase also comprises the optional addition of plastifying additives, selected from the group formed by polyvinyl alcohol, cellulose, starch (maize, wheat and potato), fish glue, lignosulphonate, ethylene glycol, polyethylene glycol and super-plasticising agents of the type commonly used in the cement industry, or any combination of them.

The extrusion forming phase is performed by screw or piston extruders, in any of their variants.

The curing phase is performed at low temperatures ranging between 20°C and 90°C, and high relative humidity, ranging between 40% and 100%, for a time period of between one hour and seven days, preferably between five and 24 hours, and even more preferably between 20 and 24 hours.

The drying phase is performed at a temperature of between 20°C and 100°C.

The resulting ceramic products may be complemented with subsequent treatments commonly used and known in the ceramics industry, such as high-temperature thermal treatment, colourings, pigments, various organic additives (silicones, silanes, bactericides), known and yet unknown decoration processes, etc.

This preferred embodiment has been supported by the following experimental tests:
AC1 is a clay that contains kaolinite, illite and montmorillonite, all of them silico-aluminous clays, treated at 850°C for two hours and ground to a grain size such that residue at 63 µm is less than 25%.
A-1 is a clay with a kaolinite content of over 40%, although any other type of clay that is sufficiently plastic for its use may be used.

### Example 1 (100% AC1 formwork)

300g of AC1 was mixed with 204g of NaOH 10M and 36g of sodium silicate in solution (composition in weight of 25.5-28.5% SiO₂ 7.5-8.5% Na₂O and a density of 1.296-1.396g/cm³ at 20°C) for ten minutes.

In order to obtain specimens formed by formwork, a mould that is 80mm long, 20mm wide and approximately 7mm thick was filled and was levelled with a spatula. The unit was then vibrated in a vibrating sieve in order to remove any possible air bubbles retained inside the mass.

Once the surface of each specimen was smoothed over, they were subjected to the hardening process:
- Time: 20 hrs
- Temperature: 85°C
- Relative humidity: 100%

Following the curing phase, the samples were stored in ambient conditions for 24 hours.

The resulting specimens presented the following information:
- Mechanical tensile and bending strength: 6.4 ± 0.9 MPa
- Apparent green density: 1.512 ± 0.010g/cm3

This example serves as a reference as this is a common course of action to this point, in accordance with the technique known in the prior art.

### Example 2 (100% AC1 Extrusion)

300g of AC1 were mixed with 165.75g of NaOH 10M and 29.25g of sodium silicate in solution (composition in weight of 25.5-28.5% SiO₂, 7.5-8.5% Na₂O and a density of 1.296-1.396g/cm3 at 20°C) for 38 minutes.

In order to obtain extrusion-formed specimens, a universal testing machine was used and on which was attached a rigid cylinder that was fitted to an extrusion nozzle with a hole 5mm in diameter. A rigid bar, adhered to a load cell, moved inside the cylinder at a speed of 240mm/min.

As a result, cylindrical specimens were formed by extrusion and measured approximately 5mm in diameter and 250mm in length.

Once the cylindrical specimens were obtained, they were subjected to the curing process:
- Time: 20 hrs
- Temperature: 85°C
- Relative humidity: 100%

Following the curing phase, the specimens were cut at a length of 80mm and the samples were stored in ambient conditions for 24 hours. The resulting specimens presented the following information:
- Mechanical tensile and bending strength: 19.8 ± 1.5 MPa
- Apparent green density: 1.523 ± 0.032g/cm³

In using extrusion we were able to increase mechanical tensile and bending strength from 6.4 to 19.8 MPa.

This example is not within the scope of the present invention.

### Example 3 (80% AC1 + 20% A-1 Extrusion)

240g of AC1 and 60g of A-1 were mixed with 140.25g of NaOH 10M and 24.75g of sodium silicate in solution (composition in weight of 25.5-28.5% SiO₂, 7.5-8.5% Na₂O and a density of 1.296-1.396g/cm³ at 20°C) for 38 minutes.

In order to obtain extrusion-formed specimens, a universal testing machine was used and on which was attached a rigid cylinder that was fitted to an extrusion nozzle with a hole 5mm in diameter. A rigid bar, adhered to a load cell, moved inside the cylinder at a speed of 120mm/min.

As a result, cylindrical specimens were formed by extrusion and measured approximately 5mm in diameter and 250mm in length.

Once the cylindrical specimens were obtained, they were subjected to the curing process:
- Time: 20 hrs
- Temperature: 85°C
- Relative humidity: 100%

Following the curing phase, the specimens were cut at a length of 80mm and the samples were stored in ambient conditions for 24 hours. The resulting specimens presented the following information:
- Mechanical tensile and bending strength: 23.2 ± 1.5 MPa
- Apparent green density: 1.610 ± 0.071 g/cm3

The addition of the A-1 clay allowed us to increase from 19.8 to 23.2 MPa.

### Example 4 (80% AC1 + 20% A-1 Extrusion)

240g of AC1 and 60g of A-1 were mixed with 133.875g of NaOH 10M and 23.625g of sodium silicate in solution (composition in weight of 25.5-28.5% SiO₂, 7.5-8.5% Na₂O and a density of 1.296-1.396g/cm3 at 20°C) for 38 minutes.

In order to obtain extrusion-formed specimens, a universal testing machine was used and on which was attached a rigid cylinder that was fitted to an extrusion nozzle with a hole 5mm in diameter. A rigid bar, adhered to a load cell, moved inside the cylinder at a speed of 15mm/min.

As a result, cylindrical specimens were formed by extrusion and measured approximately 5mm in diameter and 250mm in length.

Once the cylindrical specimens were obtained, they were subjected to the curing process:
- Time: 20 hrs
- Temperature: 85°C
- Relative humidity: 100%

Following the curing phase, the specimens were cut at a length of 80mm and the samples were stored in ambient conditions for 24 hours. The resulting specimens presented the following information:
- Mechanical tensile and bending strength: 28.3 ± 3.1 MPa
- Apparent green density: 1.659 ± 0.040g/cm3

The reduction of the liquid/solid ratio (activator/clays) allowed us to increase from 23.2 to 28.3 MPa.

Measurement of the bending of the pieces resulting from the formwork and extrusion systems showed that the latter presents higher strengths (28 MPa as opposed to 7 MPa), a result of the process generated by the extrusion method.

The results obtained to this point by other forming methods are thus improved on by extrusion. The addition of an untreated clay and a suitable selection of reaction conditions allows an increase in values and breaks with the preconceived idea that only ceramic materials with a low mechanical resistance can be obtained with alkaline activation and drying at ambient temperature.

## Claims

1. Procedure for the forming of ceramic materials made with inorganic polymers, wherein it comprises:
a phase for the mixing of a silico-aluminous material comprising metaclays with an activating solution, comprising an alkaline activator, wherein the alkaline activator comprises an MOH solution, optionally in combination with sodium or potassium silicate, wherein M is selected from the group consisting of Na, K, Rb and Cs,
a phase for the extrusion forming of the resulting mixture,
a curing phase performed
at low temperatures ranging between 20°C and 90°C, and
at high relative humidity ranging between 40% and 100%,
for a period of time of between one hour and seven days, and
a drying phase at a temperature of between 20°C and 100°C, and
the mixing phase comprising the addition of a clay selected from the group formed by aluminosilicates that have not been thermally treated, magnesium silicates and other clays that when thermally treated do not produce metaclays, or any combination of them, in a proportion ranging between 5% and 40% in weight in relation to the metaclays, wherein the metaclays are obtained as a result of a previous phase for the thermal treatment of clays, performed at a temperature ranging between 550°C and 850°C, for a treatment time ranging between five minutes and 24 hours, by means of a method selected from the group formed by rotary kiln, fluidised bed, and flash calciners.

2. Procedure for the forming of ceramic materials made with inorganic polymers, according to claim 1, **characterised in that** the previous phase for the thermal treatment of clays is performed at a temperature ranging between 750°C and 850°C.

3. Procedure for the forming of ceramic materials made with inorganic polymers, according to claim 1, **characterised in that** the activating solution contains sodium or potassium silicate in a percentage ranging between 0% and 20% in weight.

4. Procedure for the forming of ceramic materials made with inorganic polymers, according to claim 1, **characterised in that** the activating solution is presented in the form of an MOH solution with M=Na, K and with a concentration between 2 and 12 M and contains sodium or potassium silicate in a percentage ratio of 15% in weight.

5. Procedure for the forming of ceramic materials made with inorganic polymers, according to claim 1, **characterised in that** the mixing phase comprises the addition of clay in a proportion ranging between 20% and 25% in weight in relation to the metaclays.

6. Procedure for the forming of ceramic materials made with inorganic polymers, according to claim 1, **characterised in that** the mixing phase is performed using powdered silico-aluminous material, generally the finer the better, with the liquid activating solution, with a ratio between the activating solution and the powdered materials (liquid/solid) ranging from 0.25 to 0.85 or from 0.4 to 0.6 in weight.

7. Procedure for the forming of ceramic materials made with inorganic polymers, according to claim 1, **characterised in that** the mixing phase is performed with all the components in the form of powdered solids, with the subsequent addition of water prior to the next phase.

8. Procedure for the forming of ceramic materials made with inorganic polymers, according to claim 1, **characterised in that** the hardening phase is performed for a period of time between 5 and 24 hours.

9. Procedure for the forming of ceramic materials made with inorganic polymers, according to claim 8, **characterised in that** the hardening phase is performed for a period of time between 20 and 24 hours.

## Patentansprüche

1. Verfahren für das Bilden von keramischen Materialien, welche mit anorganischen Polymeren hergestellt sind, wobei es Folgendes aufweist:
eine Phase zum Mischen eines silico-aluminiumhaltigen Materials, aufweisend Meta-Tonerden mit einer Aktivierungslösung, welche einen alkalischen Aktivator aufweist, wobei der alkalische Aktivator eine MOH-Lösung, optional in Kombination mit Natrium- oder Kaliumsilikat, aufweist, wobei M aus der Gruppe, welche aus Na, K, Rb und Cs besteht, ausgewählt wird,
eine Phase zum Extrusionsformen des resultierenden Gemisches, eine Aushärtephase, welche bei niedrigen Temperaturen, die zwischen 20°C und 90°C liegen, und bei hoher relativer Feuchtigkeit, die zwischen 40% und 100% liegt, über eine Zeitdauer von zwischen einer Stunde und sieben Tagen durchgeführt wird,
und eine Trocknungsphase bei einer Temperatur von zwischen 20°C und 100°C, und wobei die Mischphase die Zugabe einer Tonerde aufweist, welche aus der Gruppe ausgewählt wird, die aus Aluminiumsilikaten, welche nicht thermisch behandelt worden sind,
Magnesiumsilikaten und anderen Tonerden, die, wenn sie thermisch behandelt werden, keine Meta-Tonerden produzieren, oder jeder Kombination davon bestehen, in einem Verhältnis, welches zwischen 5 Gew.% und 40 Gew.% in Bezug auf die Meta-Tonerden, wobei die Meta-Tonerden als ein Ergebnis einer vorhergehenden Phase zur thermischen Behandlung von Tonerden erzielt werden, welche bei einer Temperatur, die zwischen 550°C und 850°C liegt, über eine Behandlungszeit, die zwischen fünf Minuten und 24 Stunden liegt, mittels eines Verfahren durchgeführt wird, welches aus der Gruppe ausgewählt wird, die von einem Drehofen, Fließbett und Flash-Kalzinierofen gebildet wird.

2. Verfahren für das Bilden von keramischen Materialien, welche mit anorganischen Polymeren hergestellt sind, nach Anspruch 1, **dadurch gekennzeichnet, dass** die vorhergehende Phase für die thermische Behandlung von Tonerden bei einer Temperatur durchgeführt wird, die zwischen 750°C und 850°C liegt.

3. Verfahren für das Bilden von keramischen Materialien, welche mit anorganischen Polymeren hergestellt sind, nach Anspruch 1, **dadurch gekennzeichnet, dass** die Aktivierungslösung Natrium- oder Kaliumsilikat in einem Prozentsatz aufweist, der zwischen 0 Gew.% und 20 Gew.% liegt.

4. Verfahren für das Bilden von keramischen Materialien, welche mit anorganischen Polymeren hergestellt sind, nach Anspruch 1, **dadurch gekennzeichnet, dass** die Aktivierungslösung in der Form einer MOH-Lösung dargestellt wird, mit M=Na, K und mit einer Konzentration zwischen 2 und 12 M, und Natrium- oder Kaliumsilikat in einem prozentualen Verhältnis von 15 Gew.% enthält.

5. Verfahren für das Bilden von keramischen Materialien, welche mit anorganischen Polymeren hergestellt sind, nach Anspruch 1, **dadurch gekennzeichnet, dass** die Mischphase die Zugabe von Tonerde in einem Verhältnis aufweist, das zwischen 20 Gew.% und 25 Gew.% in Bezug auf die Meta-Tonerden liegt.

6. Verfahren für das Bilden von keramischen Materialien, welche mit anorganischen Polymeren hergestellt sind, nach Anspruch 1, **dadurch gekennzeichnet, dass** die Mischphase unter Verwendung von pulverisiertem silico-aluminiumhaltigen Material, im Allgemeinen je feiner desto besser, mit der flüssigen Aktivierungslösung mit einem Verhältnis zwischen der Aktivierungslösung und dem pulverisierten Material (flüssig/fest) durchgeführt wird, das zwischen 0,25 und 0,85 oder zwischen 0,4 und 0,6 in Gewicht liegt.

7. Verfahren für das Bilden von keramischen Materialien, welche mit anorganischen Polymeren hergestellt sind, nach Anspruch 1, **dadurch gekennzeichnet, dass** die Mischphase mit sämtlichen Komponenten in der Form von pulverisierten Feststoffen mit der nachfolgenden Zugabe von Wasser vor der nächsten Phase durchgeführt wird.

8. Verfahren für das Bilden von keramischen Materialien, welche mit anorganischen Polymeren hergestellt sind, nach Anspruch 1, **dadurch gekennzeichnet, dass** die Aushärtungsphase über einen Zeitraum durchgeführt wird, der zwischen 5 und 24 Stunden liegt.

9. Verfahren für das Bilden von keramischen Materialien, welche mit anorganischen Polymeren hergestellt sind, nach Anspruch 8, **dadurch gekennzeichnet, dass** die Aushärtungsphase über einen Zeitraum durchgeführt wird, der zwischen 20 und 24 Stunden liegt.

## Revendications

1. Procédé pour la formation de matériaux céramiques à partir de polymères inorganiques étant précisé qu'il comprend :
une phase de mélange consistant à mélanger un matériau silico-alumineux comprenant des méta-argiles avec une solution activante comprenant un activateur alcalin, étant précisé que l'activateur alcalin comprend une solution MOH, facultativement en combinaison avec du silicate de sodium ou de potassium, étant que précisé que M est sélectionné parmi un groupe comprenant Na, K, Rb et Cs,
une phase de formage par extrusion du mélange obtenu,
une phase de traitement réalisée
à une température basse comprise entre 20°C et 90°C, et
dans des conditions d'humidité relative comprise entre 40% et 100%,
pendant une période comprise entre une heure et sept jours, et
une phase de séchage à une température comprise entre 20°C et 100°C, et
la phase de mélange comprenant l'ajout d'une argile sélectionnée parmi le groupe formé par les aluminosilicates n'ayant pas encore été soumis à un traitement thermique, les silicates de magnésium et autres argiles qui, lorsqu'ils ont été soumis à un traitement thermique, ne produisent pas de méta-argiles, ou toute combinaison de ces substances, dans une proportion comprise entre 5% et 40% en poids par rapport aux méta-argiles, étant précisé que les méta-argiles sont obtenues suite à une phase préalable de traitement thermique des argiles, réalisé à une température comprise entre 550°C et 850°C pendant une durée de traitement comprise entre cinq minutes et 24 heures, au moyen d'une méthode sélectionnée dans le groupe comprenant le four rotatif, le lit fluidisé, et les fours flash.

2. Procédé pour la formation de matériaux céramiques à partir de polymères inorganiques conformément à la Revendication 1, **caractérisé en ce que** la phase préalable de traitement thermique des argiles est réalisée à une température située entre 750°C et 850°C.

3. Procédé pour la formation de matériaux céramiques à partir de polymères inorganiques conformément à la Revendication 1, **caractérisé en ce que** la solution activante contient du silicate de sodium ou de potassium dans une proportion située entre 0% et 20% en poids.

4. Procédé pour la formation de matériaux céramiques à partir de polymères inorganiques conformément à la Revendication 1, **caractérisé en ce que** la solution activante se présente sous la forme d'une solution MOH avec M=Na, K et avec une concentration comprise entre 2 et 12 M et contient du silicate de sodium ou de potassium dans une proportion de 15% en poids.

5. Procédé pour la formation de matériaux céramiques à partir de polymères inorganiques conformément à la Revendication 1, **caractérisé en ce que** la phase de mélange comprend l'ajout d'argile dans une proportion comprise entre 20% et 25% en poids par rapport aux méta-argiles.

6. Procédé pour la formation de matériaux céramiques à partir de polymères inorganiques conformément à la Revendication 1, **caractérisé en ce que** la phase de mélange est réalisée en utilisant un matériau pulvérulent silico-alumineux, généralement le plus fin possible, avec la solution activante liquide, avec un rapport entre la solution activante et le matériau pulvérulent silico-alumineux (liquide / solide) de 0,25 à 0,85 ou de 0,4 à 0,6 en poids.

7. Procédé pour la formation de matériaux céramiques à partir de polymères inorganiques conformément à la Revendication 1, **caractérisé en ce que** la phase de mélange est réalisée avec tous les composants sous forme de solides pulvérulents, avec l'addition ultérieure d'eau avant la phase suivante.

8. Procédé pour la formation de matériaux céramiques à partir de polymères inorganiques conformément à la Revendication 1, **caractérisé en ce que** la phase de durcissement est réalisée pendant une durée comprise entre 5 et 24 heures.

9. Procédé pour la formation de matériaux céramiques à partir de polymères inorganiques conformément à la Revendication 1, **caractérisé en ce que** la phase de durcissement est réalisée pendant une durée comprise entre 20 et 24 heures.
